# EUROPÄISCHE PATENTANMELDUNG

(11) **EP 4 552 460 A1**
(43) Veröffentlichungstag der Anmeldung: **14.05.2025**
(21) Anmeldenummer: 24211119.3
(22) Anmeldetag: 06.11.2024
(51) Int. Cl.: A01C 5/06, A01C 7/20

(54) **LANDWIRTSCHAFTLICHE ARBEITSMASCHINE UND VERFAHREN ZUM BETRIEB EINER LANDWIRTSCHAFTLICHEN ARBEITSMASCHINE**

(30) Priorität: 08.11.2023 DE 102023130921
(71) Anmelder: Horsch Maschinen GmbH, 92421 Schwandorf (DE)
(72) Erfinder: HASELHOFF, Alexander, 92421 Schwandorf (DE); KELLER, Lukas, 92421 Schwandorf (DE)
(74) Vertreter: v. Bezold & Partner Patentanwälte - PartG mbB

(57) **Zusammenfassung**

Die Erfindung betrifft eine landwirtschaftliche Arbeitsmaschine (A) zur Bearbeitung eines Bodens (B) und/oder zur Einbringung eines landwirtschaftlichen Guts in einen Boden (B) mittels zumindest einer Werkzeugvorrichtung (10), welche verstellbar angeordnet ist, wobei die zumindest eine Werkzeugvorrichtung (10) zumindest eine Werkzeugeinrichtung (100; 200; 300) und eine Funktionseinrichtung (400) umfasst, wobei die Funktionseinrichtung (400) eine Trageinheit (410) mit einem Werkzeugelement (420) zur Kontaktierung des Bodens (B) umfasst, um die zumindest eine Werkzeugeinrichtung (100; 200; 300) in einer definierten Lage zu dem Boden (B) zu führen und/oder um einen tatsächlichen Betriebszustand zu ermitteln, welcher der zumindest einen Werkzeugvorrichtung (10) zugeordnet ist, wobei das Werkzeugelement (420) an der Trageinheit (410) mittels einer Lagereinheit (430; 440; 450) beweglich gekoppelt ist, wobei die Lagereinheit (430; 440; 450) mehrstufig ausgebildet ist, und wobei zumindest eine Sensoreinrichtung (500) zur Erfassung zumindest eines Betriebsparameters der Lagereinheit (430; 440; 450) und/oder der Trageinheit (410) und/oder dem Werkzeugelement (420) zugeordnet ist. Die Erfindung betrifft ferner ein Verfahren zum Betrieb einer landwirtschaftlichen Arbeitsmaschine (A).

## Beschreibung

Die vorliegende Erfindung liegt auf dem Gebiet der Landtechnik und betrifft eine landwirtschaftliche Arbeitsmaschine und ein Verfahren zum Betrieb einer landwirtschaftlichen Arbeitsmaschine. Die landwirtschaftliche Arbeitsmaschine ist vorzugsweise als Sämaschine mit einer Mehrzahl an Werkzeugvorrichtungen in Form von Säscharvorrichtungen ausgebildet.

Im Bereich der Landwirtschaft kommen mobile landwirtschaftliche Arbeitsmaschinen zur Bearbeitung eines Bodens und/oder zur Einbringung eines landwirtschaftlichen Guts in einen Boden zum Einsatz. Die mobilen landwirtschaftlichen Arbeitsmaschinen sind beispielsweise ziehbare und/oder anhängbare landwirtschaftliche Arbeitsmaschinen ohne eigenes Antriebsaggregat, welche von einer separaten Zugmaschine in Bewegung versetzt werden.

Zur Bearbeitung des Bodens, beispielsweise in Form eines Ackerbodens einer landwirtschaftlichen Nutzfläche, umfasst eine landwirtschaftliche Arbeitsmaschine ein oder mehrere Arbeitswerkzeuge mit einer Mehrzahl von Werkzeugvorrichtungen. Zur Gewährleistung einer definierten Arbeitstiefe und/oder einer definierten Führung entlang einer Fläche des Bodens kommen verschiedene Verfahren sowie verschiedene Vorrichtungen, Einrichtungen, Einheiten und Elemente eines Arbeitswerkzeugs zum Einsatz.

Eine Herausforderung ist beispielsweise die Anpassung an sich verändernde Eigenschaften des Bodens, und zwar während eines Betriebs der landwirtschaftlichen Arbeitsmaschine. Es sind Systeme bekannt, welche dazu dienen, eine Kraft zur Führung entlang einer Fläche des Bodens und/oder eine Arbeitstiefe von Werkzeugvorrichtungen, beispielsweise Säscharvorrichtungen, auch bei sich verändernden Bedingungen während des Betriebs möglichst dauerhaft im Wesentlichen konstant zu halten.

Derartige Systeme sind auch aus der Patentliteratur des Stands der Technik bekannt, beispielsweise aus DE 10 2017 223 790 A1, DE 10 2021 113 231 und WO 2021/089197A1 A1.

Während des Betriebs der landwirtschaftlichen Arbeitsmaschine wird mittels Lagesensoren, Kraftsensoren und/oder Drucksensoren jeweils eine Lage des Arbeitswerkzeugs und/oder eine wirkende Kraft auf das Arbeitswerkzeug mittelbar oder unmittelbar erfasst. Sodann wird anhand der ermittelten Lage und/oder Kraft eine Kraft und/oder Lage an dem Arbeitswerkzeug durch Steuerung und/oder Regelung einer Aktuatorvorrichtung eingestellt. Bei einer Aktuatorvorrichtung in Form eines Hydraulikzylinders erfolgt hierbei eine Druck- und/oder Volumenstromregelung.

Entsprechende Sensoren zur Erfassung einer Kraft und/oder einer Lage kommen unter anderem auch an Tiefenführungsrollen oder Druckrollen zum Einsatz, welche eine jeweilige Werkzeugvorrichtung des Arbeitswerkzeugs entlang einer Bodenfläche führen. Ansätze zur Kraft- und/oder Lagemessung an jeweiligen Bolzen zur Lagerung einer Tiefenführungsrolle oder einer Druckrolle sind beispielsweise aus EP 2 353 354 A1 oder EP 0 372 901 A2 bekannt.

Es ist eine Aufgabe der vorliegenden Erfindung, eine landwirtschaftliche Arbeitsmaschine bereitzustellen, welche vor allem in Bezug auf die Ermittlung eines Betriebszustands der landwirtschaftlichen Arbeitsmaschine, vorzugsweise die Erfassung einer Lage und/oder einer Belastung, verbessert ist. Ferner ist es eine Aufgabe der vorliegenden Erfindung, ein Verfahren zum Betrieb einer landwirtschaftlichen Arbeitsmaschine bereitstellen.

Die Aufgabe wird durch die Merkmale der unabhängigen Ansprüche 1 und 14 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt eine landwirtschaftliche Arbeitsmaschine zur Bearbeitung eines Bodens und/oder zur Einbringung eines landwirtschaftlichen Guts in einen Boden mittels zumindest einer Werkzeugvorrichtung, vorzugsweise in einer Bewegungsrichtung und/oder mittels einer Vielzahl von Werkzeugvorrichtungen, welche verstellbar angeordnet ist, wobei die zumindest eine Werkzeugvorrichtung zumindest eine Werkzeugeinrichtung und eine Funktionseinrichtung umfasst, wobei die Funktionseinrichtung eine Trageinheit mit einem Werkzeugelement zur Kontaktierung des Bodens umfasst, um die zumindest eine Werkzeugeinrichtung in einer definierten Lage zu dem Boden und/oder in dem Boden zu führen und/oder um einen Betriebszustand zu ermitteln, welcher der zumindest einen Werkzeugvorrichtung, vorzugsweise der zumindest einen Werkzeugeinrichtung, zugeordnet ist, wobei das Werkzeugelement an der Trageinheit mittels einer Lagereinheit beweglich gekoppelt ist, wobei die Lagereinheit mehrstufig ausgebildet ist, und wobei zumindest eine Sensoreinrichtung zur Erfassung zumindest eines Betriebsparameters der Lagereinheit und/oder der Trageinheit und/oder dem Werkzeugelement zugeordnet ist und/oder daran angeordnet ist.

Mit der vorliegenden Erfindung kann eine landwirtschaftliche Arbeitsmaschine, vorzugsweise eine anhängbare und/oder mobile Sämaschine mit entsprechenden Werkzeugvorrichtungen, bereitgestellt werden, welche durch die Lagereinheit des Werkzeugelements und ihrer damit in Zusammenhang stehenden und/oder daraus resultierenden Eigenschaften eine verbesserte, das heißt genauere oder präzisere Erfassung zumindest eines Betriebsparameters ermöglicht, um vorzugsweise in Abhängigkeit davon einen Betriebszustand zu ermitteln. Die zumindest eine Werkzeugeinrichtung kann eine Schneidscheibeneinrichtung, eine Leitungseinrichtung und/oder eine Kufeneinrichtung umfassen.

Im Gegensatz zu einer Messgenauigkeit bei bekannten landwirtschaftlichen Arbeitsmaschinen aus dem Stand der Technik im Bereich von umgerechnet ca. +/- 1 kg bis ca. +/- 5kg bei anliegenden Vorspannbelastungen im Bereich von umgerechnet ca. 80 kg bis ca. 150 kg kann mit der vorliegenden Erfindung eine genauere Erfassung, das heißt präzisere Messung gewährleistet werden, vorzugsweise in Bezug auf die zumindest eine Werkzeugeinrichtung und/oder die landwirtschaftliche Arbeitsmaschine insgesamt.

Die durch die vorliegende Erfindung vorgeschlagene Lösung ist im Vergleich zu einer so genannten einschnittigen Lagerung eines Messbolzens beim Überfahren von Steinen vorteilhaft, vor allem dann, wenn Verformungen an der zumindest einen Werkzeugvorrichtung hervorgerufen werden, was beispielsweise zu verfälschten Messergebnissen von umgerechnet bis zu 700 kg führen kann. Ferner ist es in diesem Zusammenhang fraglich, ob hierzu eine Sensoreinrichtung in Form einer Kraftsensoreinrichtung überhaupt noch imstande ist, dies zu erfassen. Eine Folge davon ist sodann eine verfälschte Regelung und/oder Steuerung jeweiliger Verstellvorrichtungen, das heißt Aktuatoren. Zudem kann dadurch das Regelungs- und/oder Steuerungssystem zum so genannten Aufschwingen neigen.

Die Funktionseinrichtung kann als Werkzeugeinrichtung der Werkzeugvorrichtung ausgebildet sein. Das Werkzeugelement kann als Andruck- und/oder Tiefenführungsrolle, als Stützrad oder in Form einer Walze ausgebildet sein und vorzugsweise zur Erfassung des zumindest einen Betriebsparameters und im Weiteren zur Ermittlung des (tatsächlichen) Betriebszustands dienen.

Das Werkzeugelement kann vorzugsweise drehbar gelagert sein, um während eines Betriebs der Arbeitsmaschine an dem Boden und/oder auf dem Boden abzurollen. Das Werkzeugelement kann ein nicht-angetriebenes Werkzeugelement sein.

Die Ausbildung der Lagereinheit als mehrstufige Lagereinheit umfasst zumindest eine erste Lagerstufe und zumindest eine zweite Lagerstufe, oder mehr als eine Lagerstufe. Eine Lagerstufe kann durch zumindest zwei Lagerstellen gekennzeichnet sein und vorzugsweise zwei Lagerelemente, beispielsweise jeweils in Form von Wälzlagern, umfassen. Die mehrstufige Lagereinheit kann durch eine erhöhte Lagersteifigkeit und/oder durch eine vergrößerte Lagerpräzision gekennzeichnet sein.

Die zumindest eine Sensoreinrichtung kann als Kraft- und/oder als Drucksensoreinrichtung ausgebildet sein oder zumindest eine solche umfassen.

Der zumindest eine Betriebsparameter kann eine an dem Werkzeugelement auftretende resultierende und/oder idealisierte Betriebskraft und/oder ein auftretender resultierender und/oder idealisierter Betriebsdruck ("Schardruck") sein. Der zumindest eine Betriebsparameter kann eine gemessene Druckspannung und/oder eine gemessene Zugspannung und/oder eine gemessene Kraft und/oder eine gemessene Lage umfassen.

Die mehrstufige Lagereinheit ermöglicht ferner beispielsweise eine gleichmäßigere oder im Wesentlichen gleichmäßige Lagerung und/oder bessere Abstützung des Werkzeugelements, was zu einer stabileren Anordnung der Funktionseinrichtung für die Durchführung von Messungen führt. Mit anderen Worten kann die Lagereinheit als Kombinationslagereinheit mit mehreren Lagerstufen ausgebildet sein. Das Werkzeugelement kann an der Trageinheit an einer ersten Lagerstelle und an einer zweiten Lagerstelle einer Lagerstufe gelagert sein, wobei die erste und die zweite Lagerstelle voneinander beabstandet angeordnet sind.

Im Gegensatz zu einseitig fest eingespannten oder befestigen Wellenelementen, beispielsweise in Form von Bolzen, zur Lagerung einer Andruck- und/oder Tiefenführungsrolle ermöglicht die mehrstufige Lagereinheit beispielsweise eine gleichmäßigere Verteilung und/oder Aufteilung einer auftretenden Belastung.

Da das Werkzeugelement beispielsweise auch nicht mehr einschnittig mit der Trageinheit verbunden ist, wird eine Verstopfungsgefahr selbst bei eng beieinanderliegenden Werkzeugvorrichtungen reduziert.

Eine Lage, vorzugsweise zu dem Boden und/oder in dem Boden, kann eine Position, beispielsweise eine resultierende Arbeitstiefe, und/oder eine definierte Ausrichtung (Orientierung) umfassen.

Gemäß einem weiteren Aspekt der vorliegenden Erfindung kann vorgesehen sein, dass die Lagereinheit als eine zweistufige Lagereinheit ausgebildet ist und konfiguriert ist, eine (resultierende und/oder idealisierte) Betriebskraft an dem Werkzeugelement über eine erste Lagerstufe der Lagereinheit in zumindest zwei (resultierende und/oder idealisierte) Betriebskraftanteile aufzuteilen und über eine zweite Lagerstufe als zumindest zwei aufgeteilte Betriebskraftanteile an die Trageinheit zu übertragen.

Dadurch wird beispielsweise eine Aufteilung und/oder eine Verteilung einer Belastung in der und/oder an der Lagereinheit realisiert.

Es ist möglich, dass die Lagereinheit ein Koppelelement zur Koppelung einer ersten Lagerstufe der Lagereinheit mit einer zweiten Lagerstufe der Lagereinheit umfasst, wobei das Koppelelement über die erste Lagerstufe, vorzugsweise an dem Werkzeugelement, drehbar gelagert ist, und/oder wobei das Koppelelement, vorzugsweise an der Trageinheit, über die zweite Lagerstufe drehbar gelagert ist.

Gemäß einem weiteren Gesichtspunkt der vorliegenden Erfindung kann vorgesehen sein, dass eine erste Lagerstufe der Lagereinheit jeweils zwei Lagerelemente umfasst und/oder dass eine zweite Lagerstufe der Lagereinheit jeweils zwei Lagerelemente umfasst, wobei die jeweiligen zwei Lagerelemente in einer Richtung entlang einer Achse voneinander beabstandet angeordnet sind.

Es ist möglich, dass sich eine erste Lagerstufe der Lagereinheit an dem Werkzeugelement abstützt und dass sich eine zweite Lagerstufe der Lagereinheit an der Trageinheit abstützt, wobei in einer Richtung entlang einer Achse zwei Lagerelemente der ersten Lagerstufe zwischen zwei Lagerelementen der zweiten Lagerstufe angeordnet sind, wobei vorzugsweise die jeweiligen zwei Lagerelemente der ersten Lagerstufe und/oder der zweiten Lagerstufe im Wesentlichen symmetrisch zu einer (definierbaren oder definierten) Mittelebene der Lagereinheit angeordnet und/oder zueinander im Wesentlichen identisch ausgebildet sind.

Gemäß einem weiteren Aspekt der vorliegenden Erfindung kann vorgesehen sein, dass jedes der zwei Lagerelemente der ersten Lagerstufe als Wälzlagerelement ausgebildet ist, vorzugsweise als Rillenkugellager; und/oder dass jedes der zwei Lagerelemente der zweiten Lagerstufe jeweils ein Kugelauge umfasst und/oder als Kugelauge ausgebildet ist.

Es ist möglich, dass die zumindest eine Sensoreinrichtung an einer ersten Lagerstufe der Lagereinheit, an einer zweiten Lagerstufe der Lagereinheit, und/oder an einem Koppelelement der Lagereinheit angeordnet und/oder jeweils zugeordnet ist, wobei das Koppelelement zwischen der ersten Lagerstufe und der zweiten Lagerstufe angeordnet ist.

Gemäß einem weiteren Gesichtspunkt der vorliegenden Erfindung kann vorgesehen sein, dass die Funktionseinrichtung in einer Ansicht in einer Bewegungsrichtung der Arbeitsmaschine vor der zumindest einen Werkzeugeinrichtung oder hinter der zumindest einen Werkzeugeinrichtung angeordnet ist.

Es ist möglich, dass die zumindest eine Sensoreinrichtung an der Lagereinheit angeordnet und/oder der Lagereinheit zugeordnet ist, und dass die zumindest eine Sensoreinrichtung konfiguriert ist, zumindest einen Betriebsparameter in Form einer Zugbelastung und/oder in Form einer Druckbelastung zu erfassen, vorzugsweise an einer ersten Lagerstufe der Lagereinheit und/oder an einer zweiten Lagerstufe der Lagereinheit.

Gemäß einem weiteren Aspekt der vorliegenden Erfindung kann vorgesehen sein, dass die zumindest eine Werkzeugeinrichtung und die Funktionseinrichtung an einem Werkzeugträger der zumindest einen Werkzeugvorrichtung montiert sind. Der Werkzeugträger kann vorzugsweise ein gemeinsamer Werkzeugträger sein.

Gemäß einem weiteren Gesichtspunkt der vorliegenden Erfindung kann vorgesehen sein, dass die Trageinheit abschnittsweise gabelförmig ausgebildet ist und zur Montage an einen Werkzeugträger der zumindest einen Werkzeugvorrichtung einen ersten Tragarm und einen zweiten Tragarm umfasst, wobei die Lagereinheit zwischen dem ersten Tragarm und dem zweiten Tragarm angeordnet ist.

Es ist möglich, dass die landwirtschaftliche Arbeitsmaschine eine Automatisierungseinrichtung, vorzugsweise Steuerungs- und/oder Regelungseinrichtung, und/oder eine Schnittstelleneinrichtung zur Verbindung mit einer Automatisierungseinrichtung, vorzugsweise Steuerungs- und/oder Regelungseinrichtung, umfasst, wobei die Automatisierungseinrichtung konfiguriert ist, anhand des erfassten zumindest einen Betriebsparameters den (tatsächlichen) Betriebszustand zu ermitteln und vorzugsweise in Abhängigkeit des ermittelten (tatsächlichen) Betriebszustands die Verstellung der zumindest einen Werkzeugvorrichtung zu steuern und/oder zu regeln, vorzugsweise um einen definierten Betriebszustand einzustellen.

Gemäß einem weiteren Aspekt der vorliegenden Erfindung kann vorgesehen sein, dass die zumindest eine Werkzeugvorrichtung mittels zumindest einer Verstellvorrichtung an einen Maschinenrahmen der landwirtschaftlichen Arbeitsmaschine verstellbar gekoppelt ist, um einen definierten Betriebszustand der zumindest einen Werkzeugvorrichtung gegenüber dem Boden einzustellen. Der definierte Betriebszustand kann ein vorgegebener Betriebszustand sein.

Die vorliegende Erfindung betrifft nach einem zweiten allgemeinen Gesichtspunkt ein Verfahren zum Betrieb einer landwirtschaftlichen Arbeitsmaschine zur Bearbeitung eines Bodens und/oder zur Einbringung eines landwirtschaftlichen Guts in einen Boden mittels zumindest einer verstellbar angeordneten Werkzeugvorrichtung, welche zumindest eine Werkzeugeinrichtung und eine Funktionseinrichtung umfasst, wobei vorzugsweise die Arbeitsmaschine wie hierin offenbart konfiguriert ist, wobei ein Werkzeugelement, welches an einer Trageinheit der Funktionseinrichtung mittels einer mehrstufigen Lagereinheit beweglich gekoppelt ist, den Boden kontaktiert, um die zumindest eine Werkzeugeinrichtung im Wesentlichen in einer definierten Lage zu dem Boden und/oder in dem Boden zu führen, wobei zumindest eine Sensoreinrichtung der Lagereinheit und/oder der Trageinheit und/oder dem Werkzeugelement zugeordnet ist und einen jeweils zugeordneten zumindest einen Betriebsparameter erfasst, um einen (tatsächlichen) Betriebszustand zu ermitteln, welcher der zumindest einen Werkzeugvorrichtung, vorzugsweise der zumindest einen Werkzeugeinrichtung, zugeordnet ist, und wobei eine Automatisierungseinrichtung, vorzugsweise Steuerungs- und/oder Regelungseinrichtung, anhand oder in Abhängigkeit des erfassten zumindest einen Betriebsparameters den (tatsächlichen) Betriebszustand ermittelt und in Abhängigkeit des ermittelten (tatsächlichen) Betriebszustands die Verstellung der zumindest Werkzeugeinrichtung steuert und/oder regelt, um einen definierten Betriebszustand einzustellen, welcher vorzugsweise durch zumindest einen definierten Betriebsparameter gekennzeichnet ist.

Gemäß einem weiteren Gesichtspunkt der vorliegenden Erfindung kann vorgesehen sein, dass der jeweils zugeordnete zumindest eine Betriebsparameter einer ersten Lagerstufe der Lagereinheit und/oder einer zweiten Lagerstufe der Lagereinheit und/oder einem Koppelelement der Lagereinheit, welches die erste Lagerstufe und die zweite Lagerstufe miteinander koppelt, zugeordnet ist.

Zur Vermeidung von Wiederholungen sollen rein auf die Vorrichtung der erfindungsgemäßen landwirtschaftlichen Arbeitsmaschine gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: eine Werkzeugvorrichtung eines ersten Ausführungsbeispiels der landwirtschaftlichen Arbeitsmaschine gemäß der vorliegenden Erfindung in einer perspektivischen Ansicht;
- Fig. 2: einen Teil einer Funktionseinrichtung der Werkzeugvorrichtung aus Figur 1 in einer Schnittansicht;
- Fig. 3: eine Lagereinheit der Funktionseinrichtung der Werkzeugvorrichtung aus Figur 1 in einer Schnittansicht;
- Fig. 4: die Werkzeugvorrichtung aus Figur 1 in einer Vorderansicht (Hauptansicht);
- Fig. 5: die Werkzeugvorrichtung aus Figur 1 in einer Draufsicht;
- Fig. 6: einen Teil der landwirtschaftlichen Arbeitsmaschine gemäß dem ersten Ausführungsbeispiel zusammen mit der Werkzeugvorrichtung aus Figur 1 in einer Seitenansicht;
- Fig. 7: einen Teil eines zweiten Ausführungsbeispiels der landwirtschaftlichen Arbeitsmaschine gemäß der vorliegenden Erfindung in einer perspektivischen Ansicht, wobei Teile der Werkzeugvorrichtungen ausgeblendet sind;
- Fig. 8: einen Ausschnitt der landwirtschaftlichen Arbeitsmaschine aus Figur 7 (Ausschnitt Z in Figur 7) in vergrößerter Darstellung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung des in den Figuren dargestellten Ausführungsbeispiels dient zur näheren Veranschaulichung oder Verdeutlichung und soll den Umfang der vorliegenden Erfindung in keiner Weise beschränken.

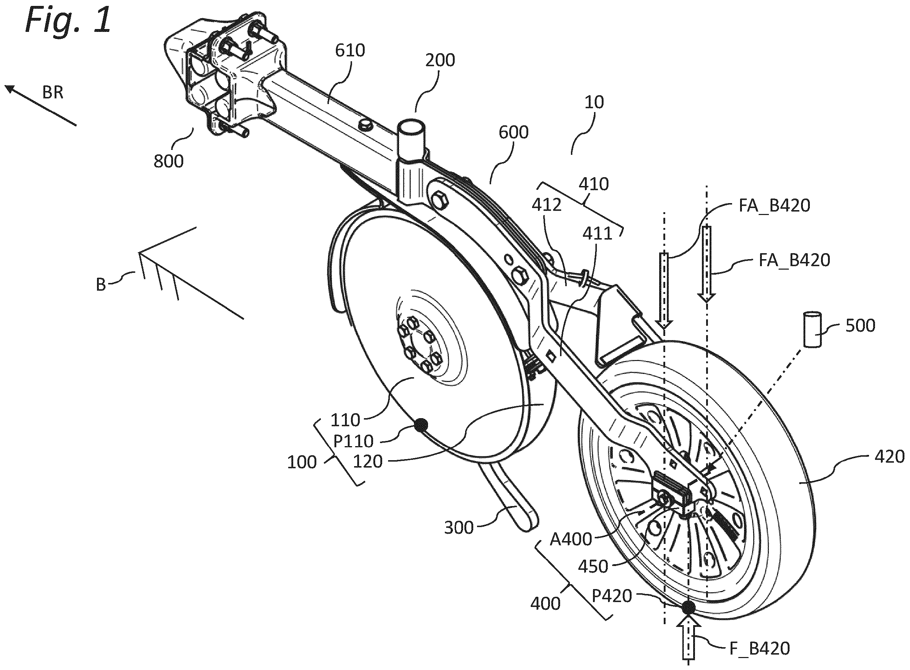

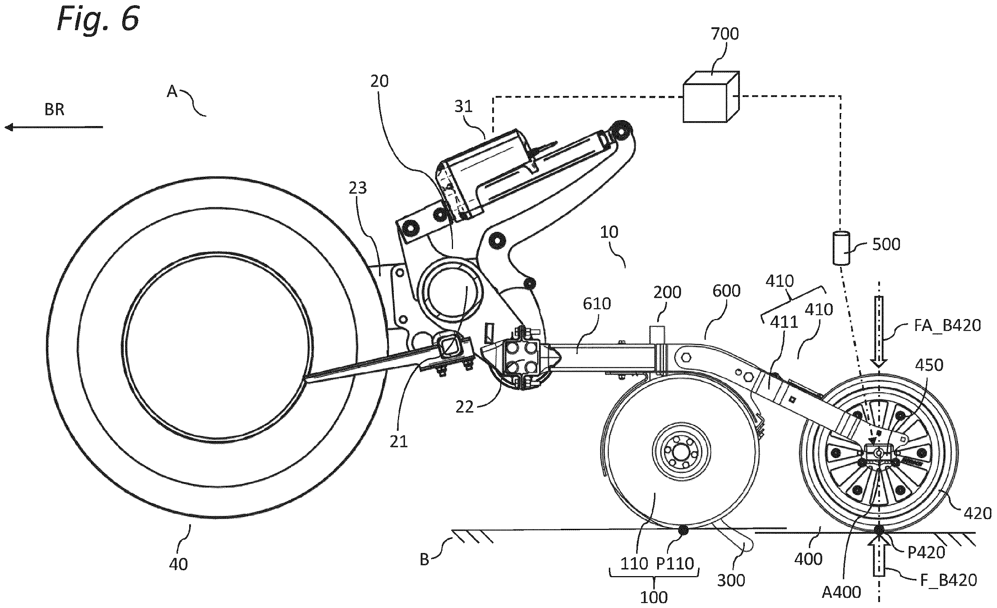

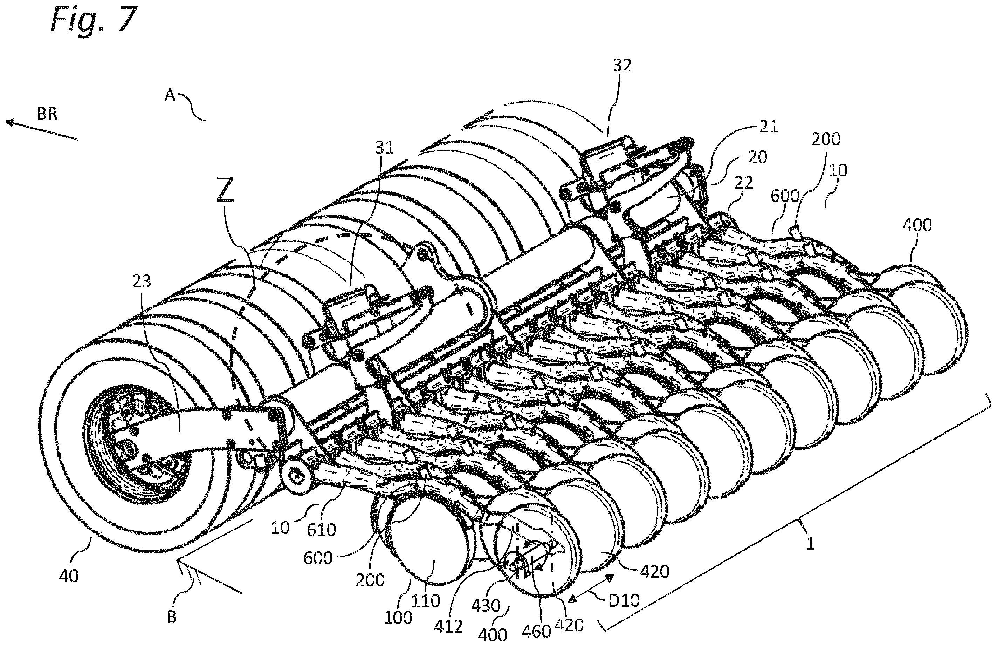

Figur 1 zeigt eine Werkzeugvorrichtung 10 eines ersten Ausführungsbeispiels der landwirtschaftlichen Arbeitsmaschine A gemäß der vorliegenden Erfindung in einer perspektivischen Ansicht. Nachfolgend wird die landwirtschaftliche Arbeitsmaschine A auch abgekürzt als "Arbeitsmaschine A" bezeichnet. In Figur 6 ist ein Teil der Arbeitsmaschine A gemäß dem ersten Ausführungsbeispiel und in Figur 7 ist ein Teil einer Arbeitsmaschine A gemäß einem zweiten Ausführungsbeispiel dargestellt.

Die Arbeitsmaschine A ist vorzugsweise eine mobile anhängbare und/oder ziehbare Arbeitsmaschine A zur Bearbeitung eines Bodens B und/oder zur Einbringung und/oder zur Verteilung eines landwirtschaftlichen Guts in den Boden B, wobei die Einbringung und/oder Verteilung des landwirtschaftlichen Guts vorzugsweise die Aussaat von Saatgut und/oder die Düngung mit Düngemittel umfasst. Mit anderen Worten ist die Arbeitsmaschine A eine an eine Zugmaschine anhängbare Arbeitsmaschine A. Die Zugmaschine ist vorzugsweise eine landwirtschaftliche Zugmaschine und in den Figuren aus Gründen der Übersichtlichkeit nicht dargestellt. Die Zugmaschine kann beispielsweise ein Ackerschlepper in Form eines Radtraktors oder eines Raupentraktors sein. Es ist ferner möglich, dass die Zugmaschine ein sogenannter Agrotruck ist. Vorzugsweise umfasst die Zugmaschine ein eigenes Antriebsaggregat und stellt unter anderem in einem Betriebszustand, das heißt während eines Betriebs der Arbeitsmaschine A eine resultierende und/oder idealisierte Betriebszugkraft zum Ziehen und somit zum Bewegen der Arbeitsmaschine A in einer Bewegungsrichtung BR zur Verfügung. Die Bewegungsrichtung BR kann die Fahrtrichtung und/oder die Zugrichtung der Arbeitsmaschine A sein.

Ein Betriebszustand der Arbeitsmaschine A ist vorzugsweise derjenige Zustand der Arbeitsmaschine A, in welchem die Arbeitsmaschine A bestimmungsgemäß und/oder ordnungsgemäß, vor allem zur Gewährleistung der Funktion und Sicherheit, betrieben werden kann und/oder betrieben wird. Mit anderen Worten betrifft oder umfasst der Betriebszustand vorzugsweise die Feldarbeit der Arbeitsmaschine A.

Die Arbeitsmaschine A umfasst zumindest eine Werkzeugvorrichtung 10 und vorzugsweise mehrere Werkzeugvorrichtungen 10, welche zusammen ein Arbeitswerkzeug 1 ausbilden. Das Arbeitswerkzeug 1 kann als ein Werkzeugmodul von mehreren Werkzeugmodulen mit jeweils einer Vielzahl von Werkzeugvorrichtungen 10 der Arbeitsmaschine A ausgebildet sein.

Zur näheren Veranschaulichung ist in Figur 7 anhand des dargestellten Teils einer Arbeitsmaschine A gemäß einem zweiten Ausführungsbeispiel ein Arbeitswerkzeug 1 mit mehreren, das heißt mit einer Vielzahl von Werkzeugvorrichtungen 10 abgebildet. Das Arbeitswerkzeug 1 kann als ein separat vormontierbares und somit als ein separat vormontiertes Werkzeugmodul der Arbeitsmaschine A ausgebildet sein. Das Arbeitswerkzeug 1 in Figur 7 wird nachfolgend noch näher beschrieben.

Die Werkzeugvorrichtung 10 ist zur Montage an einen Maschinenrahmen 20, das heißt an eine Tragstruktur 21 und an ein Tragelement 22 des Maschinenrahmens 20 der Arbeitsmaschine A konfiguriert (siehe hierzu beispielsweise auch die Figuren 6 und 7) und umfasst hierzu eine Montageeinrichtung 800 mit einer Montagelasche und einer Anschlaglasche. Zwischen der Montagelasche und der Anschlaglasche kann zumindest eine Schraubverbindung ausgebildet sein. Die Montagelasche ist an einem freien Ende eines Lenkers 610 eines gemeinsamen und/oder zentralen Werkzeugträgers 600 der Werkzeugvorrichtung 10 ausgebildet. In Figur 1 ist bei der Montageeinrichtung 800 eine so genannte Gummischnurlagerung als Bestandteil der Montageeinrichtung 800 dargestellt, welche zwischen der Montagelasche und der Anschlaglasche angeordnet ist und zur Schwingungsdämpfung vier zylinderförmige Lagerkörper umfasst. Die Lagerkörper sind aus einem Werkstoff auf Basis eines Elastomers ausgebildet und kontaktieren im montierten Zustand der Werkzeugvorrichtung 10 und somit in einem Herstellungszustand der Arbeitsmaschine A das Tragelement 22. Die Montagelasche, die Anschlaglasche sowie die Lagerkörper der Montageeinrichtung 800 sind aus Gründen der Übersichtlichkeit nicht gekennzeichnet.

Die Werkzeugvorrichtung 10 ist vorzugsweise als Säscharwerkzeugvorrichtung ausgebildet und umfasst mehrere Werkzeugeinrichtungen 100, 200, 300, welche vorzugsweise zur Bearbeitung des Bodens B und zur Einbringung eines landwirtschaftlichen Guts in den Boden B konfiguriert sind, vorzugsweise während des Betriebs der Arbeitsmaschine A in der Bewegungsrichtung BR.

Bei dem ersten Ausführungsbeispiel umfasst die Werkzeugvorrichtung 10 eine Schneidscheibeneinrichtung 100 mit einer ersten Schneidscheibe 110 und mit einer zweiten Schneidscheibe 120. Die Schneidscheibeneinrichtung 100 ist zur Erzeugung einer Furche in dem Boden B während des Betriebs der Arbeitsmaschine A konfiguriert. Die beiden Schneidscheiben 110, 120 sind vorzugsweise zu einer definierten oder zu einer definierbaren Ebene zueinander schrägliegend angeordnet und drehbar gelagert. Ein resultierender und/oder idealisierter Aufstandspunkt (Kontaktpunkt) P110 der ersten Schneidscheibe 110 auf dem Boden B ist in Figur 1 dargestellt und gekennzeichnet. Mit anderen Worten ist die Schneidscheibeneinrichtung 100 als sogenanntes Doppelscheiben-Säschar ausgebildet. Die Schneidscheibeneinrichtung 100 kann auch durch eine andere Konfiguration gekennzeichnet sein und beispielsweise als Einscheiben-Säschar nur eine Schneidscheibe umfassen.

Die Werkzeugvorrichtung 10 umfasst eine Leitungseinrichtung 200. Die Leitungseinrichtung 200 ist zur Zuführung des landwirtschaftlichen Guts in den Boden B, das heißt in eine gebildete Furche zwischen der ersten Schneidscheibe 110 und der zweiten Schneidscheibe 120 konfiguriert. Die Leitungseinrichtung 200 umfasst eine Leitung, beispielsweise in Form eines abschnittsweise formstabilen und/oder abschnittsweise formvariablen Rohrs, mit einem freien Ende im Bereich zwischen den Schneidscheiben 110, 120 als Auslass und mit einem freien Ende zum Anschluss an eine Förder- und/oder Verteileinrichtung des landwirtschaftlichen Guts mittels einer Transportleitung. Es ist möglich, dass bei einem alternativen Ausführungsbeispiel der Arbeitsmaschine A die Leitungseinrichtung 200 beispielsweise zwei separate Leitungen umfassen kann, welche voneinander beabstandet angeordnet sind, wobei eine erste Leitung zur Führung eines landwirtschaftlichen Guts in Form von Saatgut angeordnet und/oder konfiguriert ist, und wobei eine zweite Leitung zur Führung eines landwirtschaftlichen Guts in Form von Düngemittel angeordnet und/oder konfiguriert ist.

Die Werkzeugvorrichtung 10 umfasst eine Kufeneinrichtung 300. Die Kufeneinrichtung 300 ist zum Andrücken und/oder zur Fixierung des landwirtschaftlichen Guts in der Furche konfiguriert. Die Kufeneinrichtung 300 ist bei dem vorliegenden Ausführungsbeispiel bügelförmig ausgebildet und kann beispielsweise aus einem Werkstoff auf Basis eines Kunststoffs hergestellt sein.

Die Arbeitsmaschine A kann als kombinierte landwirtschaftliche Arbeitsmaschine A zur Bodenbearbeitung und/oder zur Aussaat eines landwirtschaftlichen Guts ausgebildet sein. Es versteht sich, dass die Arbeitsmaschine A als Sämaschine beispielsweise einen Behälter zur Bevorratung des landwirtschaftlichen Guts umfasst, welcher mit einer Förder- und/oder Verteileinrichtung zum Transport des landwirtschaftlichen Guts zu den Säscharwerkzeugvorrichtungen 10 konfiguriert ist.

Es ist zusätzlich oder alternativ möglich, dass die Werkzeugvorrichtung 10 weitere und/oder andere, das heißt verschiedene Werkzeugeinrichtungen umfasst, beispielsweise Grubbereinrichtungen zur Lockerung und/oder Krümelung des Bodens B und/oder zur Einarbeitung von landwirtschaftlichen Materialien in den Boden B, Eggeneinrichtungen zur Lockerung und/oder Zerkleinerung des Bodens B, Schleudereinrichtungen zur Ausbringung und/oder Verteilung eines landwirtschaftlichen Guts, und/oder Drilleinrichtungen zum Ablegen eines landwirtschaftlichen Guts in den Boden B.

Die Werkzeugvorrichtung 10 der Arbeitsmaschine A gemäß der vorliegenden Erfindung umfasst eine Funktionseinrichtung 400. Die Funktionseinrichtung 400 kann als eine Werkzeugeinrichtung der Werkzeugvorrichtung 10 ausgebildet sein. Die Werkzeugeinrichtungen 100, 200, 300 und die Funktionseinrichtung 400 sind entweder vorzugsweise unmittelbar oder mittelbar an den gemeinsamen Werkzeugträger 600 der Werkzeugvorrichtung 10 montiert. Mit anderen Worten stellt der gemeinsame Werkzeugträger 600 eine Tragstruktur in Bezug auf die Werkzeugeinrichtungen 100, 200, 300 und die Funktionseinrichtung 400 dar.

Die Funktionseinrichtung 400 umfasst eine Trageinheit 410 mit einem Werkzeugelement 420 zur Kontaktierung des Bodens B, um die Werkzeugeinrichtungen 100, 200, 300 im Wesentlichen in einer definierten Lage zu dem Boden B und/oder in dem Boden B zu führen und/oder um einen (tatsächlichen) Betriebszustand zu ermitteln, welcher der Werkzeugvorrichtung 10, vorzugsweise zumindest einer Werkzeugeinrichtung 100, 200, 300, zugeordnet ist.

Das Werkzeugelement 420 kann in Form einer Andruck- und/oder Tiefenführungsrolle, eines Stützrads oder in Form einer Walze ausgebildet sein. In Abhängigkeit von Eigenschaften des Bodens B kann das Werkzeugelement 420 beispielsweise durch eine geringere Breite (beispielsweise bei einem mittleren bis schweren Boden B) oder durch eine größere Breite (beispielsweise bei einem leichten bis mittleren Boden B) angepasst ausgebildet sein. Das Werkzeugelement 420 ist konfiguriert, infolge einer Bewegung der Arbeitsmaschine A während des Betriebs in der Bewegungsrichtung BR mit dem Boden B zu kontaktieren und an dem Boden B abzurollen. Das Werkzeugelement 420 ist als ein (ab-)/rollbares Werkzeugelement 420 und/oder als ein nicht-angetriebenes Werkzeugelement 420 ausgebildet. Zusätzlich kann das Werkzeugelement 420 ausgebildet sein, einen Belastungsanteil einer Belastung der Arbeitsmaschine A auf den Boden B und/oder von dem Boden B zu übertragen und/oder abzustützen. Die Belastung kann beispielsweise eine resultierende und/oder idealisierte Kraft, vorzugsweise eine Druckkraft, oder ein resultierender und/oder idealisierter Druck und somit eine Druckspannung sein.

Die definierte Lage kann beispielsweise eine definierte Arbeitstiefe und somit eine Position und/oder eine definierte Arbeitsrichtung und somit eine Ausrichtung (Orientierung) umfassen.

Das Werkzeugelement 420 ist an der Trageinheit 410 mittels einer Lagereinheit 430, 440, 450 beweglich gekoppelt, vorzugsweise um eine resultierende und/oder idealisierte Achse A400 drehbar gelagert. Mit anderen Worten ist die Lagereinheit 430, 440, 450 zwischen dem Werkzeugelement 420 und der Trageinheit 410 drehbar angeordnet. Die Achse A400 ist vorzugsweise eine Drehachse.

Mittels der Konfiguration des Werkzeugelements 420 als Rollelement sowie mittels der Kontaktierung des Werkzeugelements 420 mit dem Boden B über die Lagereinheit 430, 440, 450 ist es möglich, während der Betriebs der Arbeitsmaschine A die Werkzeugeinrichtungen 100, 200, 300 gezielt im Wesentlichen in einer definierten Lage zu führen und vorzugsweise einen (tatsächlichen) Betriebszustand zu ermitteln, welcher der Werkzeugvorrichtung 10, vorzugsweise zumindest einer Werkzeugeinrichtung 100, 200, 300, zugeordnet ist. Der (tatsächliche) Betriebszustand kann eine resultierende und/oder idealisierte Kraft auf das Werkzeugelement 420, einen resultierenden und/oder idealisierten Druck, vorzugsweise eine Druckspannung, und/oder eine tatsächliche Lage und somit eine tatsächliche Position und/oder Ausrichtung zu dem Boden B und/oder in dem Boden B umfassen.

Zur Ermittlung des (tatsächlichen) Betriebszustands umfasst die Arbeitsmaschine A zumindest eine Sensoreinrichtung 500 zur Erfassung zumindest eines Betriebsparameters, wobei die zumindest eine Sensoreinrichtung 500 und/oder der zumindest eine Betriebsparameter der Lagereinheit 430, 440, 450 und/oder der Trageinheit 410 und/oder dem Werkzeugelement 420 zugeordnet sein kann. Die Zuordnung der zumindest einen Sensoreinrichtung 500 kann beispielsweise dadurch realisiert sein, dass die zumindest eine Sensoreinrichtung 500 an einer jeweiligen Einheit 410, 420, 430, 440, 450 und/oder an einem jeweiligen Element einer jeweiligen Einheit 410, 420, 430, 440, 450 angeordnet ist. Die zumindest eine Sensoreinrichtung 500 kann als Kraftsensoreinrichtung und/oder als Drucksensoreinrichtung ausgebildet sein.

Der zumindest eine Betriebsparameter kann beispielsweise ein gemessener Betriebsparameter oder eine Vielzahl gemessener Betriebsparameter sein. Der zumindest eine Betriebsparameter kann einen gemessenen Druckspannungswert oder einen gemessenen Zugspannungswert umfassen und/oder repräsentieren. Vorzugsweise ist der zumindest eine Betriebsparameter dem tatsächlichen Betriebszustand zugeordnet. Mit anderen Worten kann der tatsächliche Betriebszustand anhand und/oder in Abhängigkeit des erfassten zumindest einen Betriebsparameters ermittelt werden.

Die Lagereinheit 430, 440, 450 der Arbeitsmaschine A gemäß der vorliegenden Erfindung ist mehrstufig ausgebildet und umfasst daher mehr als eine Lagerstufe und somit mehrere Lagerstufen. Eine Lagerstufe kann jeweils zwei Lagerelemente umfassen, welche voneinander beabstandet und/oder zueinander gegenüberliegend angeordnet sind. Eine Lagerstufe umfasst vorzugsweise zwei Lagerstellen, welche voneinander beabstandet und/oder zueinander gegenüberliegend angeordnet sind. Eine Lagerstufe kann konfiguriert sein, eine resultierende und/oder idealisierte Kraft über zumindest zwei Lagerelemente der Lagerstufe aufzuteilen, um eine gleichmäßigere Lagerung zu realisieren. Bei der vorliegenden Erfindung kann eine Lagerstufe konfiguriert sein, im Wesentlichen nur Kräfte zu übertragen und keine Drehmomente.

In Figur 1 ist eine resultierende und/oder idealisierte Betriebskraft F_B420, welche an dem Werkzeugelement 420 während des Betriebs der Arbeitsmaschine A auftritt oder anliegt und zu einer mechanischen Belastung der Werkzeugvorrichtung 10 führt, dargestellt. Die Betriebskraft F_B420 wirkt vorzugsweise über einen resultierenden und/oder idealisierten Aufstandspunkt P430 des Werkzeugelements 430 auf dem Boden B.

Die Trageinheit 410 und/oder die Lagereinheit 430; 440; 450 ist ausgebildet und/oder konfiguriert, die Betriebskraft F_B420 an dem Werkzeugelement 420 in zumindest zwei Betriebskraftanteile FA_B420 aufzuteilen. Die resultierenden und/oder idealisierten Wirkrichtungen der Betriebskraft F_B420 und der Betriebskraftanteile FA_B420 ist in den Figuren mittels strichpunktierter Linien näher veranschaulicht.

Im Vergleich zu den bekannten Lösungen aus dem Stand der Technik zur Lagerung von Lagerungsbolzen einer Andruck- und/oder Tiefenführungsrolle ist das Werkzeugelement 420 an zwei Lagerstellen an der Trageinheit 410 angeordnet, wodurch beispielsweise eine Genauigkeit zur Erfassung des zumindest einen Betriebsparameters, das heißt eine Messgenauigkeit verbessert ist. Dies ergibt sich anhand der weiteren Figuren und der nachfolgenden Beschreibung.

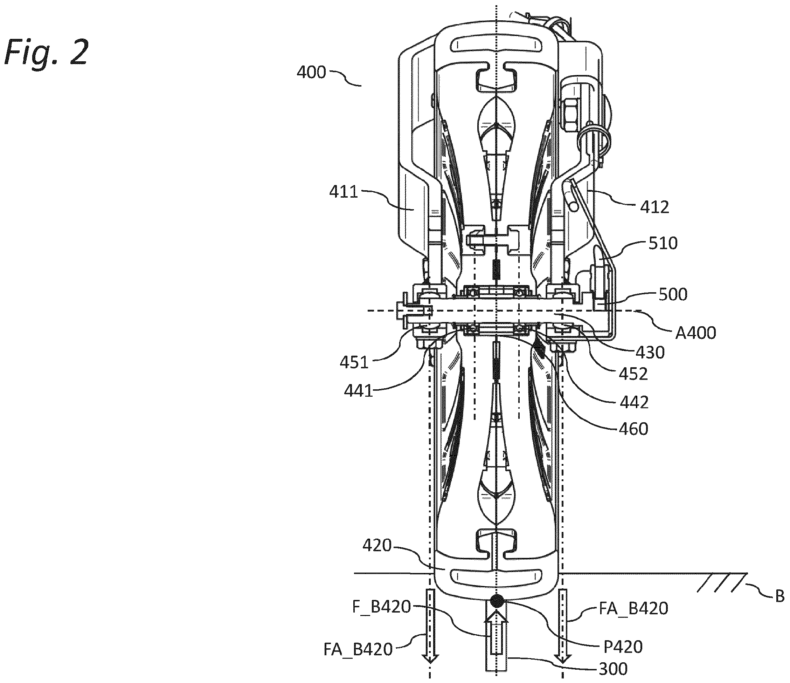

Figur 2 zeigt einen Teil der Funktionseinrichtung 400 aus Figur 1 in einer Schnittansicht in der Bewegungsrichtung BR.

Aus der Zusammenschau der Darstellungen in den Figuren 1 und 2 ergibt sich, dass die Trageinheit 410 abschnittsweise gabelförmig ausgebildet ist. Die Trageinheit 410 umfasst zur Montage an den gemeinsamen Werkzeugträger 600 einen ersten Tragarm 411 und einen zweiten Tragarm 412. Sowohl der erste Tragarm 411 als auch der zweite Tragarm 412 kann jeweils beispielsweise aus einem bandförmigen und/oder flachen Halbzeug aus einem Werkstoff auf Basis eines Metalls oder einer Metalllegierung hergestellt sein, beispielsweise durch zumindest einen Biege- und/oder Stanz- und/oder Schmiedevorgang.

Die Lagereinheit 430, 440, 450 ist zwischen dem ersten Tragarm 411 und dem zweiten Tragarm 412 angeordnet und an einem jeweiligen Endabschnitt befestigt. Mit anderen Worten sind der erste Tragarm 410 und der zweite Tragarm 412 über die Lagereinheit 430, 440, 450 miteinander verbunden.

Durch die Ausbildung der Lagereinheit 430, 440, 450 als mehrstufige Lagereinheit wird beispielsweise eine verbesserte, das heißt genauere oder präzisere Erfassung eines an der Lagereinheit 430, 440, 450 anliegenden Betriebszustands erfassbar. Die zumindest eine Sensoreinrichtung 500 kann an unterschiedlichen Elementen der Lagereinheit 430, 440, 450 angeordnet und/oder diesen zugeordnet sein.

Wie bereits beschrieben ist bei dem vorliegenden Ausführungsbeispiel der Arbeitsmaschine A die Lagereinheit 430, 440, 450 als eine zweistufige Lagereinheit 430, 440, 450 ausgebildet und konfiguriert, eine resultierende und/oder idealisierte Betriebskraft F_B420 an dem Werkzeugelement 420 über eine erste Lagerstufe 440 der Lagereinheit 430, 440, 450 in die beiden resultierenden und/oder idealisierten Betriebskraftanteile FA_B420 aufzuteilen, vorzugsweise im Wesentlichen gleichwertig aufzuteilen, und über eine zweite Lagerstufe 450 wiederum in Form der zwei aufgeteilten Betriebskraftanteile FA_B420 an die Trageinheit 410, das heißt an die beiden Tragarme 411 und 412 zu übertragen. Mit anderen Worten umfasst die Lagereinheit 430, 440, 450 eine erste Lagerstufe 440 und eine zweite Lagerstufe 450. Zur Koppelung der ersten Lagerstufe 440 mit der zweiten Lagerstufe 450 umfasst die Lagereinheit 430, 440, 450 ein Koppelelement 430.

Das Koppelelement 430 ist vorzugsweise als Wellenelement bolzenförmig ausgebildet. Mit anderen Worten erstreckt sich das Koppelelement 430 im Wesentlichen in Richtung der Achse A400 im Wesentlichen zylinderförmig und bildet einen Lagerungsbolzen für das Werkzeugelement 420. Das Koppelelement 430 ist über die erste Lagerstufe 440 an dem Werkzeugelement 420 drehbar gelagert und über die zweite Lagerstufe 450 an der Trageinheit 410 drehbar gelagert. Das Koppelelement 430 bildet ein zwischenliegendes Lagerelement der Lagereinheit 430, 440, 450.

Wie aus Figur 2 hervorgeht, ist die zumindest eine Sensoreinrichtung 500 an dem Koppelelement 430 angeordnet und/oder diesem zumindest zugeordnet. Die zumindest eine Sensoreinrichtung 500 kann beispielsweise als Messeinrichtung zur Erfassung einer dehnenden oder einer stauchenden Verformung ausgebildet sein, beispielsweise als so genannter Dehnungsmessstreifen (DMS), um zumindest einen Betriebsparameter in Form einer mechanischen Spannung zu erfassen und eine damit einhergehende Belastung zu ermitteln. Ferner kann die zumindest eine Sensoreinrichtung 500 konfiguriert sein, anhand oder in Abhängigkeit der erfassten Spannung zumindest ein elektrisch/elektronisch verarbeitbares Signal zu erzeugen, beispielsweise zumindest ein Spannungssignal. Das zumindest eine Signal umfasst oder repräsentiert eine Information, welche dem erfassten Betriebsparameter zugeordnet ist und/oder welche den erfassten Betriebsparameter umfasst.

Das zumindest eine Signal kann drahtlos über eine Signal-Sende-/Empfangs-Einheit der zumindest einen Sensoreinrichtung 500 oder über eine Schnittstelleneinrichtung, oder drahtgebunden über einen Leiter einer elektrischen Signalleitung 510 von der zumindest einen Signaleinrichtung 500 zu einer Automatisierungseinrichtung 700, vorzugsweise zu einer Steuerungs- und/oder Regelungseinrichtung 700, übertragen werden, vorzugsweise über ein Kommunikationsnetzwerk mit einem Bussystem, beispielsweise einem seriellen Bussystem wie dem so genannten Controller Area Network (CAN).

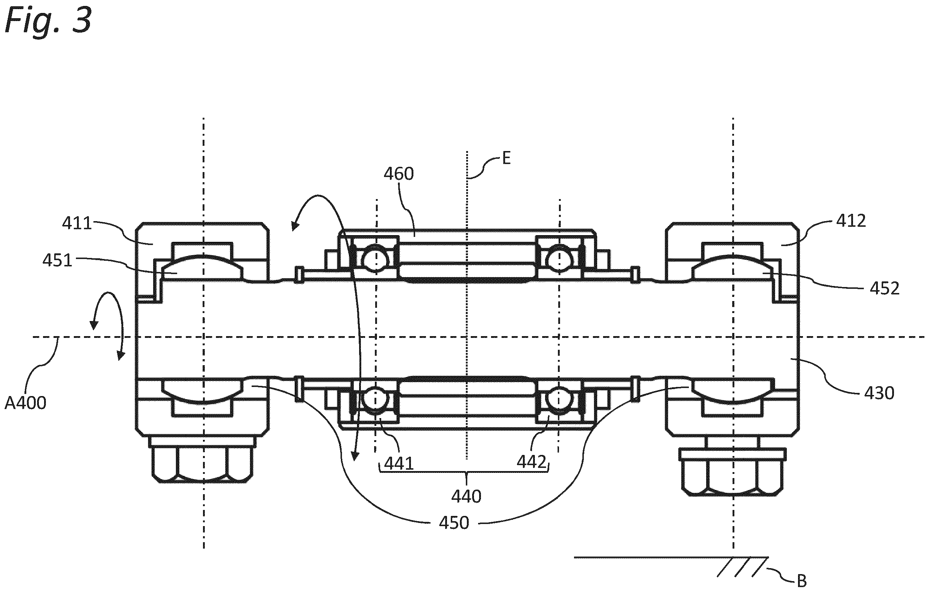

Zur weiteren Veranschaulichung zeigt Figur 3 die Lagereinheit 430, 440, 450 in einer Schnittansicht und in vergrößerter Darstellung, wobei ein Teil der Trageinheit 410, das heißt der Tragarme 411 und 412 sichtbar sind. Resultierende und/oder idealisierte Kräfte sind ausgeblendet, allerdings sind deren Wirklinien dargestellt.

Die erste Lagerstufe 440 umfasst ein erstes Lagerelement 441 und ein zweites Lagerelement 442. Das erste Lagerelement 41 und das zweite Lagerelement 442 ist jeweils als Wälzlagerelement mit mehreren Wälzkörpern (Lagerkörpern) in Form von Kugeln ausgebildet. Mit anderen Worten ist das erste und zweite Lagerelement 441 und 442 jeweils ein Rillenkugellager (Radialkugellager), welches zur Übertragung von im Wesentlichen Radialkräften und somit einer Radialbelastung konfiguriert ist.

Die beiden Lagerelemente 441 und 442 sind über ihren jeweiligen Innenring beispielsweise mittels einer Hülse voneinander beabstandet und mittels zweier weiterer Hülsen in einer axialen Richtung entlang der Achse A400 an dem Koppelelement 430 festgelegt. Die Hülsen sind hierbei auf das Koppelelement 430 aufgeschoben. Eine Sicherung in axialer Richtung entlang der Achse A400 erfolgt beispielsweise mittels Sprengringen. An den jeweiligen Außenringen der beiden in axialer Richtung voneinander beabstandeten Lagerelementen 441 und 442 ist eine Hohlwelle 460 angeordnet, welche wiederum mit dem Werkzeugelement 420 fest verbunden ist, beispielsweise mittels einer im Wesentlichen formschlüssigen und/oder einer im Wesentlichen kraftschlüssigen Verbindung, vorzugsweise in Form eines Pressverbands.

Bei einem alternativen Ausführungsbeispiel der Arbeitsmaschine A ist es möglich, dass die beiden Lagerelemente 441 und 442 der ersten Lagerstufe 440 jeweils als Schrägkugellager oder als Kegelrollenlager in einer sogenannten O-Anordnung oder in einer sogenannten X-Anordnung angeordnet und/oder ausgebildet sind, um beispielsweise die Steifigkeit der Lagerung des Werkzeugelements 130 zu erhöhen.

Die zweite Lagerstufe 450 umfasst ein erstes Lagerelement 451 und ein zweites Lagerelement 452. Das erste Lagerelement 451 und das zweite Lagerelement 452 ist jeweils als Kugelauge ausgebildet, welches in einem entsprechend ausgebildeten Aufnahmeabschnitt an dem ersten und zweiten Tragarm 411 und 412 aufgenommen ist, vorzugsweise beweglich aufgenommen ist, besonders bevorzugt drehbar gelagert ist. Mit anderen Worten bildet die zweite Lagerstufe 450 analog zu der ersten Lagerstufe 440 eine zweischnittige Verbindung zur Lagerung. Alternativ zu der Ausbildung des ersten und des zweiten Lagerelements 451 und 451 als Kugelauge können auch Wälzlager in Form von Rillenkugellagern oder Gummilagerelemente vorgesehen sein.

Somit stützt sich die erste Lagerstufe 440 an dem Werkzeugelement 420 und die zweite Lagerstufe 450 an der Trageinheit 410 ab. Die erste Lagerstufe 440 ist in axialer Richtung entlang der Achse A400 zwischen der zweiten Lagerstufe 450, das heißt zwischen dem ersten Lagerelement 451 und dem zweiten Lagerelement 452 der zweiten Lagerstufe 450 angeordnet.

Eine an der Lagereinheit 430, 440, 450 über das gekoppelte Werkzeugelement 420 anliegende Betriebskraft F_B420 und/oder eine anliegende mechanische Betriebsspannung, beispielsweise in Form einer Druckspannung, kann durch die Ausbildung der Lagereinheit 430, 440, 450 als mehrstufige Lagereinheit 430, 440, 450, vorzugsweise als zweistufige Lagereinheit 430, 440, 450, genauer und/oder mit weniger negativ beeinflussenden Störgrößen erfasst werden. Dies stellt beispielsweise einen Vorteil gegenüber bisherigen Lagerungskonzepten einer Andruck- und/oder Tiefenführungsrolleneinrichtung dar, bei welchen eine Lagerungswelle, beispielsweise in Form eines Bolzens, an lediglich nur einer Stelle befestigt ist, was eine sogenannte einschnittige Verbindung oder einschnittige Lagerung darstellt.

Durch das Lagerungskonzept bei der vorliegenden Erfindung sind oder können Verformungen wesentlich verringert werden, womit eine gewisse Anpassungsfähigkeit miteinhergeht, und zwar bevor beispielsweise eine starke Veränderung der auftretenden Betriebskraft F_A420 auftritt. Die Lagereinheit 430, 440, 450 ist ausreichend stabil, um Verformungen zu verringern, allerdings auch ausreichen flexibel, um Bewegungen des Werkzeugelements 420 bis zu einem gewissen Grad zuzulassen, und zwar ohne eine Erfassungsgenauigkeit, das heißt Messgenauigkeit zu beeinflussen.

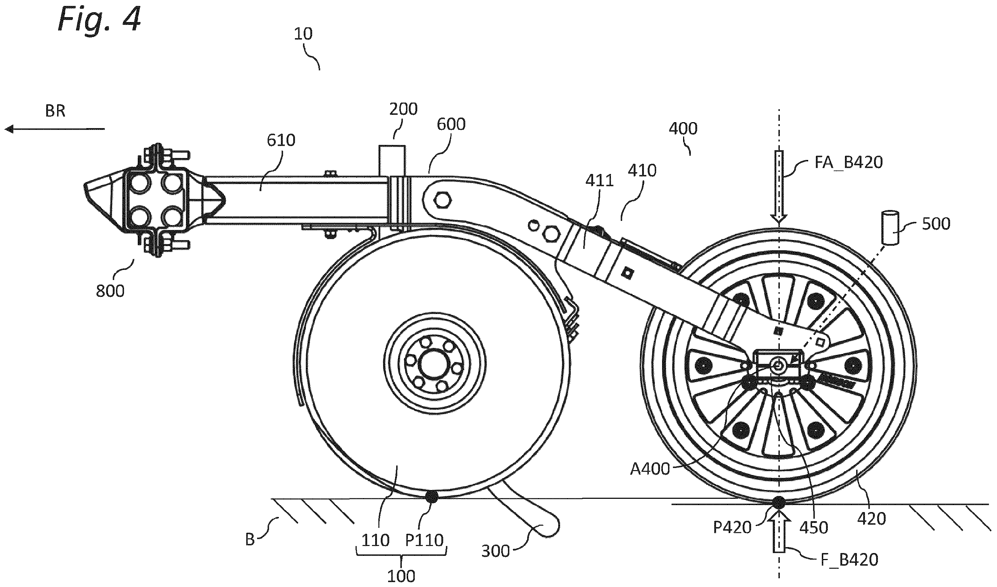

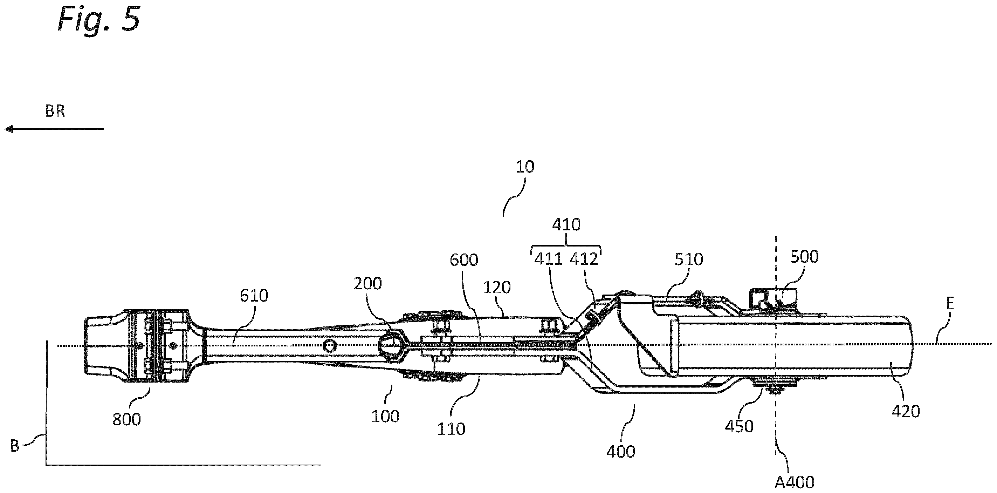

Figur 4 zeigt die Werkzeugvorrichtung 10 aus Figur 1 in einer Vorderansicht (Hauptansicht), wobei die Vorderansicht vorzugsweise die aussagekräftigste Ansicht darstellt. Figur 5 zeigt die Werkzeugvorrichtung 10 aus Figur 1 in einer Draufsicht.

Aus den Figuren 4 und 5 geht hervor, dass die Funktionseinrichtung 400 in einer Ansicht in der Bewegungsrichtung BR der Arbeitsmaschine A vor der zumindest einen Werkzeugeinrichtung 100, 200, 300 angeordnet ist. Es ist alternativ möglich, dass die Funktionseinrichtung 400 in einer Ansicht in der Bewegungsrichtung BR hinter der zumindest einen Werkzeugeinrichtung 100, 200, 300 angeordnet ist.

Aus Figur 5 geht ferner hervor, dass die Werkzeugvorrichtung 10 zu einer definierbaren oder definierten Mittelebene E der Werkzeugvorrichtung 10 im Wesentlichen symmetrisch ausgebildet ist, vorzugsweise mit Ausnahme eines Abstreifelements für Material des Bodens B, welches an dem zweiten Tragarm 412 zwischen dem Werkzeugelement 420 und dem Werkzeugträger 600 angeordnet ist.

Figur 6 zeigt einen Teil der Arbeitsmaschine A gemäß dem ersten Ausführungsbeispiel zusammen mit der Werkzeugvorrichtung 10 aus Figur 1 in einer Seitenansicht.

An der Tragstruktur 21 des Maschinenrahmens 20 ist über jeweilige Schenkel 23 des Maschinenrahmens 20 zumindest eine Abstützvorrichtung 40 in Form einer Walze angeordnet. Die Walze 40 kann beispielsweise als eine Zahnpackerwalze, eine Disc-Packerwalze, eine Doppel-Disc-Packerwalze, eine Doppelprofilring-Packerwalze, eine Reifen-Packerwalze, und/oder als eine Packerprofilwalze ausgebildet sein und/oder jeweils zumindest eine solche umfassen.

Die Tragstruktur 21 kann wiederum selbst an einem Tragrahmen der Arbeitsmaschine A verstellbar angeordnet sein.

Die Werkzeugvorrichtung 10 ist mittels zumindest einer Verstellvorrichtung 31 an den Maschinenrahmen 20 verstellbar gekoppelt und somit gegenüber dem Maschinenrahmen 20 beweglich und/oder einstellbar. Die zumindest eine Verstellvorrichtung 31 ist konfiguriert, eine Lage der Werkzeugvorrichtung 10 infolge Betätigung einzustellen. Mit anderen Worten ist die zumindest eine Verstellvorrichtung 31 eine betätigbare Verstellvorrichtung 31. Das Betätigungselement der zumindest einen Verstellvorrichtung 31 kann als zumindest eines von folgenden ausgebildet sein und/oder zumindest einen von folgenden umfassen: einen Linearaktuator, beispielsweise in Form eines doppeltwirkenden Zylinders oder in Form eines Spindeltriebs; einen Schwenkaktuator; und/oder ein Gestänge mit einer definierten Übersetzung. Die zumindest eine Verstellvorrichtung 31 umfasst ein Betätigungselement, ein Abstützelement und ein Stellelement. Das Betätigungselement ist mit dem Abstützelement sowie mit dem Stellelement gelenkig gelagert und zur Übertragung von Kräften infolge einer Betätigung des Betätigungselements konfiguriert.

Die zumindest eine Verstellvorrichtung 31, das heißt deren Einheiten und Elemente sind aus Gründen der Übersichtlichkeit nicht näher gekennzeichnet.

Ferner ist in Figur 6 die Automatisierungseinrichtung 700, welche vorzugsweise als Steuerungs- und/oder Regelungseinrichtung) ausgebildet ist, dargestellt. Die Automatisierungseinrichtung 700 ist zur Steuerung und/oder Regelung der Betätigung der zumindest einen Verstellvorrichtung 31, vorzugsweise des Betätigungselements der zumindest einen Verstellvorrichtung 31, zumindest in Abhängigkeit eines erfassten Betriebsparameters konfiguriert.

Zur Steuerung und/oder Regelung der zumindest einen Verstellvorrichtung 31 kann die Automatisierungseinrichtung 700 zur Verarbeitung weiterer Parameter wie hierin offenbart konfiguriert sein. Die Automatisierungseinrichtung 700 kann Bestandteil eines sogenannten Steuergeräts mit einem Bedienterminal sein.

Die Automatisierungseinrichtung 700 kann als eine signalverarbeitende elektronische Recheneinheit, beispielsweise nach der Von-Neumann-Architektur, konfiguriert sein oder zumindest eine solche umfassen, und somit zumindest ein Rechenwerk mit zumindest einem Rechenkern (Zentraleinheit, Prozessor), ein Steuerwerk, ein Bussystem, ein Eingabe-/Ausgabewerk, ein Speicherelement zur Speicherung von Kennwerten und/oder Parametern und weitere Komponenten und Elemente aufweisen. Das Rechenwerk kann zur Ausführung zumindest eines Algorithmus des Verfahrens wie hierin offenbart konfiguriert sein und/der vorzugsweise mehrere Rechenkerne umfassen. Mit anderen Worten kann die signalverarbeitende elektronische Recheneinheit als Digitalrechner ausgebildet sein, um elektrische/elektronische Signale zu verarbeiten und/oder zu übertragen, das heißt zu empfangen und/oder zu senden.

Mittels der zumindest einen Verstellvorrichtung 31 und der Automatisierungseinrichtung 700 kann ein definierter Betriebszustand, vorzugsweise eine definierte Lage der Werkzeugvorrichtung 10 und/oder eine definierte Belastung auf die Werkzeugvorrichtung 10 und somit auf ein Arbeitswerkzeug 1 insgesamt eingestellt werden, und zwar in Bezug auf den Boden B, in Bezug auf den Maschinenrahmen 20 und/oder in Bezug auf die übrige Arbeitsmaschine A.

Figur 7 zeigt einen Teil eines zweiten Ausführungsbeispiels der Arbeitsmaschine A gemäß der vorliegenden Erfindung in einer perspektivischen Ansicht, wobei ein Teil der Trageinheiten 410, das heißt jeweils ein erster Tragarm 411 ausgeblendet ist.

Die Arbeitsmaschine A des zweiten Ausführungsbeispiels ist im Wesentlichen identisch zu der Arbeitsmaschine A des ersten Ausführungsbeispiels, wobei im Wesentlichen die Gestaltung des Werkzeugträgers 600 der jeweiligen Werkzeugvorrichtung 10 verschieden ist. Ferner sind einige Einrichtungen und Einheiten weiter vereinfacht dargestellt.

Das Arbeitswerkzeug 1 der Arbeitsmaschine A umfasst zwanzig Werkzeugvorrichtungen 10, welche zueinander in einer Reihe angeordnet sind, wobei sich die Reihe im Wesentlichen senkrecht zu der Bewegungsrichtung BR erstreckt. Die Werkzeugvorrichtungen 10 sind in der Bewegungsrichtung BR abschnittsweise und/oder abwechselnd hintereinander und/oder nebeneinander angeordnet. Aus Gründen der Übersichtlichkeit sind lediglich zwei Werkzeugvorrichtungen 10 und entsprechende Einheiten 100, 200, 400 gekennzeichnet.

Ein resultierender und/oder kennzeichnender Abstand D10 zwischen jeweils zueinander benachbarten Werkzeugvorrichtungen 10 kann in einem Bereich zwischen beispielsweise ca. 12,5cm und ca. 15,0 cm liegen.

Es ist möglich, dass nicht jede Werkzeugvorrichtung 10 der Arbeitsmaschine A eine jeweils zugeordnete Sensoreinrichtung 500 umfasst, sondern eine Sensoreinrichtung 500 einer definierten Anzahl und somit einer Sektion von Werkzeugvorrichtungen 10 zugeordnet ist. Ferner ist es möglich, dass jeweils zueinander benachbarte Werkzeugvorrichtungen 10 unterschiedlich ausgebildet sein können, beispielsweise in der Bewegungsrichtung BR in Bezug auf eine Länge und/oder senkrecht zu der Bewegungsrichtung BR in Bezug auf einen Abstand zueinander. Dadurch kann beispielsweise eine Anfälligkeit für Verstopfung weiter reduziert werden oder zumindest vermieden werden.

Ferner ergibt sich aus der Darstellung in Figur 7, dass die Arbeitsmaschine A neben einer ersten Verstellvorrichtung 31 eine zweite Verstellvorrichtung 32 umfasst. Die zweite Verstellvorrichtung 32 ist zu der ersten Verstellvorrichtung 31 an dem Maschinenrahmen 20 beabstandet angeordnet und im Wesentlichen identisch ausgebildet, das heißt umfasst im Wesentlichen identisch ausgebildete Elemente.

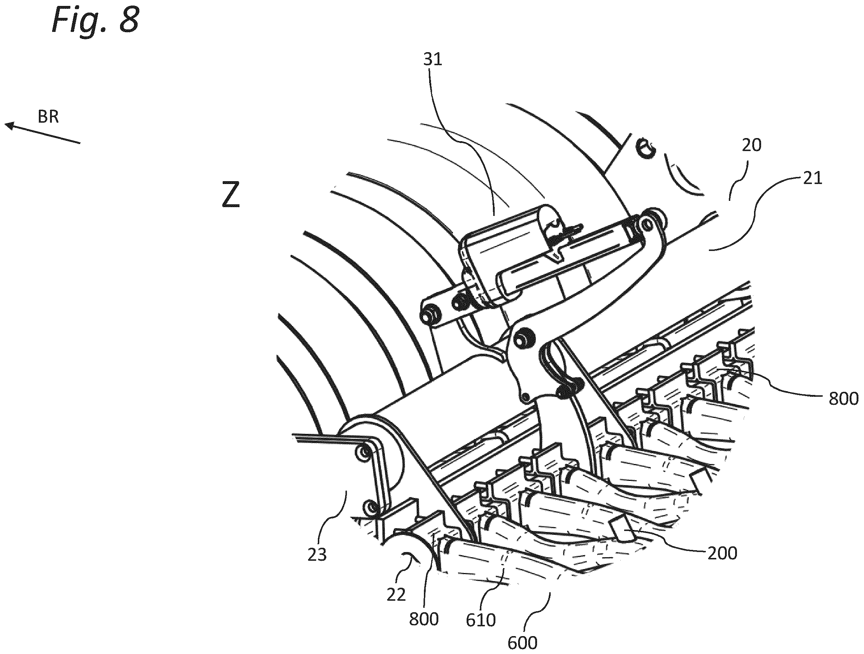

Figur 8 zeigt einen Ausschnitt der Arbeitsmaschine A aus Figur 7 (Ausschnitt Z in Figur 7) in vergrößerter Darstellung, um zumindest den Bereich der Verstellvorrichtung 31 in einer Detailansicht graphisch näher darzustellen.

Gut erkennbar sind die Montageeinrichtungen 800 der jeweiligen Werkzeugvorrichtungen 10 an dem Tragelement 20, von welchen zwei gekennzeichnet sind. Ferner sind Gelenkverbindungen der Verstellvorrichtung 31 an den jeweiligen Elementen erkennbar.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: Arbeitswerkzeug
- 10: Werkzeugvorrichtung
- 20: Maschinenrahmen
- 21: Tragstruktur
- 22: Tragelement
- 23: Schenkel
- 31: Verstellvorrichtung
- 32: Verstellvorrichtung
- 40: Abstützvorrichtung
- 100: Schneidscheibeneinrichtung
- 110: Schneidscheibe
- 120: Schneidscheibe
- 200: Leitungseinrichtung
- 300: Kufeneinrichtung
- 400: Funktionseinrichtung
- 410: Trageinheit
- 411: Tragarm
- 412: Tragarm
- 420: Werkzeugelement
- 430: Koppelelement
- 440: Lagerstufe
- 441: Lagerelement
- 442: Lagerelement
- 450: Lagerstufe
- 451: Lagerelement
- 452: Lagerelement
- 460: Hohlwelle
- 500: Sensoreinrichtung
- 510: Leitung
- 600: Werkzeugträger
- 610: Lenker
- 700: Automatisierungseinrichtung (Steuerungs- und/oder Regelungseinrichtung)
- 800: Montageeinrichtung
- A: Arbeitsmaschine
- A400: Achse
- B: Boden
- BR: Bewegungsrichtung
- D10: Abstand
- F_B420: Betriebskraft
- FA_B420: Betriebskraftanteil
- E: Mittelebene
- P110: Aufstandspunkt
- P430: Aufstandspunkt

## Patentansprüche

1. Landwirtschaftliche Arbeitsmaschine (A) zur Bearbeitung eines Bodens (B) und/oder zur Einbringung eines landwirtschaftlichen Guts in einen Boden (B) mittels zumindest einer Werkzeugvorrichtung (10), welche verstellbar angeordnet ist,
wobei die zumindest eine Werkzeugvorrichtung (10) zumindest eine Werkzeugeinrichtung (100; 200; 300) und eine Funktionseinrichtung (400) umfasst,
wobei die Funktionseinrichtung (400) eine Trageinheit (410) mit einem Werkzeugelement (420) zur Kontaktierung des Bodens (B) umfasst, um die zumindest eine Werkzeugeinrichtung (100; 200; 300) in einer definierten Lage zu dem Boden (B) zu führen und/oder um einen Betriebszustand zu ermitteln, welcher der zumindest einen Werkzeugvorrichtung (10) zugeordnet ist,
wobei das Werkzeugelement (420) an der Trageinheit (410) mittels einer Lagereinheit (430; 440; 450) beweglich gekoppelt ist,
wobei die Lagereinheit (430; 440; 450) mehrstufig ausgebildet ist, und
wobei zumindest eine Sensoreinrichtung (500) zur Erfassung zumindest eines Betriebsparameters der Lagereinheit (430; 440; 450) und/oder der Trageinheit (410) und/oder dem Werkzeugelement (420) zugeordnet ist.

2. Arbeitsmaschine (A) nach Anspruch 1,
wobei die Lagereinheit (430; 440; 450) als eine zweistufige Lagereinheit (430; 440; 450) ausgebildet ist und konfiguriert ist, eine Betriebskraft (F_B420) an dem Werkzeugelement (420) über eine erste Lagerstufe (440) der Lagereinheit (430; 440; 450) in zumindest zwei Betriebskraftanteile (FA_B420) aufzuteilen und über eine zweite Lagerstufe (450) als zumindest zwei aufgeteilte Betriebskraftanteile (FA_B420) an die Trageinheit (410) zu übertragen.

3. Arbeitsmaschine (A) nach Anspruch 1 oder 2,
wobei die Lagereinheit (430; 440; 450) ein Koppelelement (430) zur Koppelung einer ersten Lagerstufe (440) der Lagereinheit (430; 440; 450) mit einer zweiten Lagerstufe (450) der Lagereinheit (430; 440; 450) umfasst,
wobei das Koppelelement (430) über die erste Lagerstufe (440), vorzugsweise an dem Werkzeugelement (420), drehbar gelagert ist, und/oder
wobei das Koppelelement (430), vorzugsweise an der Trageinheit (410), über die zweite Lagerstufe (450) drehbar gelagert ist.

4. Arbeitsmaschine (A) nach einem der vorhergehenden Ansprüche,
wobei eine erste Lagerstufe (440) der Lagereinheit (430; 440; 450) jeweils zwei Lagerelemente (441, 442) umfasst und/oder
wobei eine zweite Lagerstufe (450) der Lagereinheit (430; 440; 450) jeweils zwei Lagerelemente (451, 452) umfasst,
wobei die jeweiligen zwei Lagerelemente (441, 442; 451, 452) in einer Richtung entlang einer Achse (A400) voneinander beabstandet angeordnet sind.

5. Arbeitsmaschine (A) nach einem der vorhergehenden Ansprüche,
wobei sich eine erste Lagerstufe (440) der Lagereinheit (430; 440; 450) an dem Werkzeugelement (420) abstützt und wobei sich eine zweite Lagerstufe (450) der Lagereinheit (430; 440; 450) an der Trageinheit (410) abstützt,
wobei in einer Richtung entlang einer Achse (A400) zwei Lagerelemente (441, 442) der ersten Lagerstufe (440) zwischen zwei Lagerelementen (451, 452) der zweiten Lagerstufe (450) angeordnet sind,
wobei vorzugsweise die jeweiligen zwei Lagerelemente (441, 442; 451, 452) der ersten Lagerstufe (440) und/oder der zweiten Lagerstufe (450) symmetrisch zu einer Mittelebene (E) der Lagereinheit (430; 440; 450) angeordnet und/oder zueinander identisch ausgebildet sind.

6. Arbeitsmaschine (A) nach einem der vorhergehenden Ansprüche 4 oder 5,
wobei jedes der zwei Lagerelemente (441, 442) der ersten Lagerstufe (440) als Wälzlagerelement ausgebildet ist, vorzugsweise als Rillenkugellager; und/oder
wobei jedes der zwei Lagerelemente (451, 452) der zweiten Lagerstufe (450) jeweils ein Kugelauge umfasst.

7. Arbeitsmaschine (A) nach einem der vorhergehenden Ansprüche,
wobei die zumindest eine Sensoreinrichtung (500) an einer ersten Lagerstufe (440) der Lagereinheit (430; 440; 450), an einer zweiten Lagerstufe (450) der Lagereinheit (430; 440; 450), und/oder an einem Koppelelement (430) der Lagereinheit (430; 440; 450) angeordnet und/oder jeweils zugeordnet ist,
wobei das Koppelelement (430) zwischen der ersten Lagerstufe (440) und der zweiten Lagerstufe (450) angeordnet ist.

8. Arbeitsmaschine (A) nach einem der vorhergehenden Ansprüche,
wobei die Funktionseinrichtung (400) in einer Ansicht in einer Bewegungsrichtung (BR) der Arbeitsmaschine (A) vor der zumindest einen Werkzeugeinrichtung (100; 200; 300) oder hinter der zumindest einen Werkzeugeinrichtung (100; 200; 300) angeordnet ist.

9. Arbeitsmaschine (A) nach einem der vorhergehenden Ansprüche,
wobei die zumindest eine Sensoreinrichtung (500) an der Lagereinheit (430; 440; 450) angeordnet und/oder der Lagereinheit (430; 440; 450) zugeordnet ist, und
wobei die zumindest eine Sensoreinrichtung (500) konfiguriert ist, zumindest einen Betriebsparameter in Form einer Zugbelastung und/oder in Form einer Druckbelastung zu erfassen, vorzugsweise an einer ersten Lagerstufe (440) der Lagereinheit (430; 440; 450) und/oder an einer zweiten Lagerstufe (450) der Lagereinheit (430; 440; 450).

10. Arbeitsmaschine (A) nach einem der vorhergehenden Ansprüche,
wobei die zumindest eine Werkzeugeinrichtung (100; 200; 300) und die Funktionseinrichtung (400) an einem Werkzeugträger (600) der zumindest einen Werkzeugvorrichtung (10) montiert sind.

11. Arbeitsmaschine (A) nach einem der vorhergehenden Ansprüche,
wobei die Trageinheit (410) abschnittsweise gabelförmig ausgebildet ist und zur Montage an einen Werkzeugträger (600) der zumindest einen Werkzeugvorrichtung (10) einen ersten Tragarm (411) und einen zweiten Tragarm (412) umfasst,
wobei die Lagereinheit (430; 440; 450) zwischen dem ersten Tragarm (411) und dem zweiten Tragarm (412) angeordnet ist.

12. Arbeitsmaschine (A) nach einem der vorhergehenden Ansprüche,
wobei die Arbeitsmaschine (A) eine Automatisierungseinrichtung (700), vorzugsweise Steuerungs- und/oder Regelungseinrichtung (700), und/oder eine Schnittstelleneinrichtung zur Verbindung mit einer Automatisierungseinrichtung (700), vorzugsweise Steuerungs- und/oder Regelungseinrichtung (700), umfasst,
wobei die Automatisierungseinrichtung (700) konfiguriert ist, anhand des erfassten zumindest einen Betriebsparameters den Betriebszustand zu ermitteln und vorzugsweise in Abhängigkeit des ermittelten Betriebszustands die Verstellung der zumindest einen Werkzeugvorrichtung (10) zu steuern und/oder zu regeln.

13. Arbeitsmaschine (A) nach einem der vorhergehenden Ansprüche,
wobei die zumindest eine Werkzeugvorrichtung (10) mittels zumindest einer Verstellvorrichtung (31, 32) an einen Maschinenrahmen (20) der Arbeitsmaschine (A) verstellbar gekoppelt ist, um einen definierten Betriebszustand der zumindest einen Werkzeugvorrichtung (10) gegenüber dem Boden (B) einzustellen.

14. Verfahren zum Betrieb einer landwirtschaftlichen Arbeitsmaschine (A) zur Bearbeitung eines Bodens (B) und/oder zur Einbringung eines landwirtschaftlichen Guts in einen Boden (B) mittels zumindest einer verstellbar angeordneten Werkzeugvorrichtung (10), welche zumindest eine Werkzeugeinrichtung (100; 200; 300) und eine Funktionseinrichtung (400) umfasst,
wobei vorzugsweise die Arbeitsmaschine (A) nach zumindest einem der vorhergehenden Ansprüche konfiguriert ist,
wobei ein Werkzeugelement (420), welches an einer Trageinheit (410) der Funktionseinrichtung (400) mittels einer mehrstufigen Lagereinheit (430; 440; 450) beweglich gekoppelt ist, den Boden (B) kontaktiert, um die zumindest eine Werkzeugeinrichtung (100; 200; 300) in einer definierten Lage zu dem Boden (B) zu führen,
wobei zumindest eine Sensoreinrichtung (500) der Lagereinheit (430; 440; 450) und/oder der Trageinheit (410) und/oder dem Werkzeugelement (420) zugeordnet ist und einen jeweils zugeordneten zumindest einen Betriebsparameter erfasst, um einen Betriebszustand zu ermitteln, welcher der zumindest einen Werkzeugvorrichtung (10) zugeordnet ist, und
wobei eine Automatisierungseinrichtung (700), vorzugsweise Steuerungs- und/oder Regelungseinrichtung (700), anhand des erfassten zumindest einen Betriebsparameters den Betriebszustand ermittelt und in Abhängigkeit des ermittelten Betriebszustands die Verstellung der zumindest Werkzeugeinrichtung (10) steuert und/oder regelt, um einen definierten Betriebszustand einzustellen.

15. Verfahren nach Anspruch 14,
wobei der jeweils zugeordnete zumindest eine Betriebsparameter einer ersten Lagerstufe (440) der Lagereinheit (430; 440; 450) und/oder einer zweiten Lagerstufe (450) der Lagereinheit (430; 440; 450) und/oder einem Koppelelement (430) der Lagereinheit (430; 440; 450), welches die erste Lagerstufe (440) und die zweite Lagerstufe (450) miteinander koppelt, zugeordnet ist.
